(19)

**Europäisches Patentamt**
**European Patent Office**
**Office européen des brevets**

(11) **EP 4 564 455 A2**

(12) **EUROPEAN PATENT APPLICATION**

(43) Date of publication:
**04.06.2025  Bulletin 2025/23**

(21) Application number: **24216687.4**

(22) Date of filing: **29.11.2024**

(51) International Patent Classification (IPC):
**H01M 4/133** (2010.01)          **H01M 4/587** (2010.01)
**H01M 4/62** (2006.01)

(52) Cooperative Patent Classification (CPC):
**H01M 4/133; H01M 4/587; H01M 4/625;**
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.12.2023  KR 20230172490
14.11.2024  KR 20240161758**

(71) Applicants:
• **SK On Co., Ltd.**
**Seoul 03161 (KR)**
• **SK innovation Co., Ltd.**
**Seoul 03188 (KR)**

(72) Inventors:
• **LEE, Yong Seok**
**34124 Daejeon (KR)**

• **KIM, Sung Do**
**34124 Daejeon (KR)**
• **KIM, Jeong A**
**34124 Daejeon (KR)**
• **KIM, Ho Seong**
**34124 Daejeon (KR)**
• **PARK, Sun Min**
**34124 Daejeon (KR)**
• **SEO, Seung Deok**
**34124 Daejeon (KR)**
• **YU, Do Ae**
**34124 Daejeon (KR)**
• **LEE, Ji Sun**
**34124 Daejeon (KR)**
• **CHOI, Young Ju**
**34124 Daejeon (KR)**

(74) Representative: **Stolmár & Partner
Patentanwälte PartG mbB
Blumenstraße 17
80331 München (DE)**

(54) **ANODE FOR LITHIUM SECONDARY BATTERY AND LITHIUM SECONDARY BATTERY INCLUDING THE SAME**

(57)     An anode for a lithium secondary battery includes an anode current collector, a first anode active material layer disposed on at least one surface of the anode current collector and including a first anode active material, and a second anode active material layer disposed on the first anode active material layer and including a second anode active material. The first anode active material includes a graphite-based active material, and the second anode active material includes a composite particle including silicon. A tortuosity of the second anode active material layer obtained by an X-ray microscope (XRM) analysis is 2.32 or less.

FIG. 1

**Description**

TECHNICAL FIELD

The disclosure of this patent application relates to an anode for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Recently, as an application range of the lithium secondary battery is expanded, the lithium secondary battery having higher capacity and power is being developed. For example, silicon having high capacity can be included in an anode active material.

However, rapid charge life-span properties of an electrode may be degraded due to a volume expansion ratio and a low conductivity of silicon.

SUMMARY

According to an aspect of the present disclosure, there is provided an anode for a lithium secondary battery having improved life-span properties.

According to an aspect of the present disclosure, there is provided a lithium secondary battery having improved life-span properties.

An anode for a lithium secondary battery includes an anode current collector, a first anode active material layer disposed on at least one surface of the anode current collector and including a first anode active material, and a second anode active material layer disposed on the first anode active material layer and including a second anode active material. The first anode active material includes a graphite-based active material, and the second anode active material includes a composite particle including silicon. A tortuosity of the second anode active material layer obtained by an X-ray microscope (XRM) analysis is 2.32 or less.

In some embodiments, the tortuosity of the second anode active material layer may be defined by Equation 1.

$$[\text{Equation 1}]$$

$$T2 = L_{P2}/L_2$$

In Equation 1, T2 is the tortuosity of the second anode active material layer, $L_{P2}$ is an average flow path length of a lithium ion when the lithium ion penetrates the second anode active material layer in a thickness direction, and $L_2$ is a thickness of the second anode active material layer.

In some embodiments, the composite particle may include a carbon-based particle and a silicon-containing coating formed on a surface of the carbon-based particle.

In some embodiments, the carbon-based particle may include at least one selected from the group consisting of an activated carbon, a carbon nanotube, a carbon nanowires, graphene, a carbon fiber, carbon black, graphite, a porous carbon, a pyrolyzed cryogel, a pyrolyzed xerogel and a pyrolyzed aerogel.

In some embodiments, a content of the composite particle based on a total weight of the first anode active material and the second anode active material may be in a range from 2 wt% to 30 wt%.

In some embodiments, a content of the composite particle based on a total weight of the first anode active material and the second anode active material may be in a range from 4.5 wt% to 24 wt%.

In some embodiments, the second anode active material may further include a graphite-based active material.

In some embodiments, a content of the composite particle based on a total weight of the second anode active material may be in a range from 4 wt% to 40 wt%.

In some embodiments, a content of the composite particle based on a total weight of the second anode active material may be in a range from 9 wt% to 40 wt%.

In some embodiments, the graphite-based active material may include at least one of artificial graphite and natural graphite.

In some embodiments, a tortuosity of the first anode active material layer obtained through X-ray microscope (XRM) analysis may be greater than the tortuosity of the second anode active material layer.

In some embodiments, the tortuosity of the first anode active material layer is defined by Equation 2.

$$[\text{Equation 2}]$$

$$T1 = L_{P1}/L_1$$

In Equation 2, T1 is the tortuosity of the first anode active material layer, $L_{P1}$ is an average flow path length of a lithium ion when the lithium ion penetrates the first anode active material layer in a thickness direction, and $L_1$ is a thickness of the first anode active material layer.

In some embodiments, the tortuosity of the first anode active material layer may be in a range from 2.34 to 3.0.

In some embodiments, a ratio of the tortuosity of the first anode active material layer relative to the tortuosity of the second anode active material layer is in a range from 1.03 to 1.44.

In some embodiments, the first anode active material may not include the composite particle.

In some embodiments, the first anode active material layer may be directly disposed on the anode current collector, and the second anode active material layer may be directly disposed on the first anode active material layer.

A lithium secondary battery includes the above-describe anode for a lithium secondary battery, and a cathode facing the anode.

According to an embodiment of the present disclosure, rapid charge life-span properties of a secondary battery may be improved.

According to an embodiment of the present disclosure, mobility of both electrons and lithium ions in an anode may be improved.

The anode and the lithium secondary battery according to the present disclosure may be widely applied in green technology fields such as an electric vehicle, a battery charging station, a solar power generation, a wind power generation, etc., using a battery, etc. The anode and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 is a schematic cross-sectional view illustrating an anode for a lithium secondary battery in accordance with example embodiments.
FIG. 2 is a schematic cross-sectional view illustrating a composite particle in accordance with example embodiments.
FIG. 3 and FIG. 4 are a schematic plan view and a schematic cross-sectional view, respectively, illustrating a lithium secondary battery in accordance with example embodiments.

DETAILED DESCRIPTION OF THE EMBODIMENTS

According to embodiments disclosed in the present application, an anode for a lithium secondary battery (hereinafter, that may be abbreviated as an anode) including a multi-layered anode active material layer. According to embodiments of the present disclosure, a lithium secondary battery (hereinafter, that may be abbreviated as a secondary battery) including the anode is also provided.

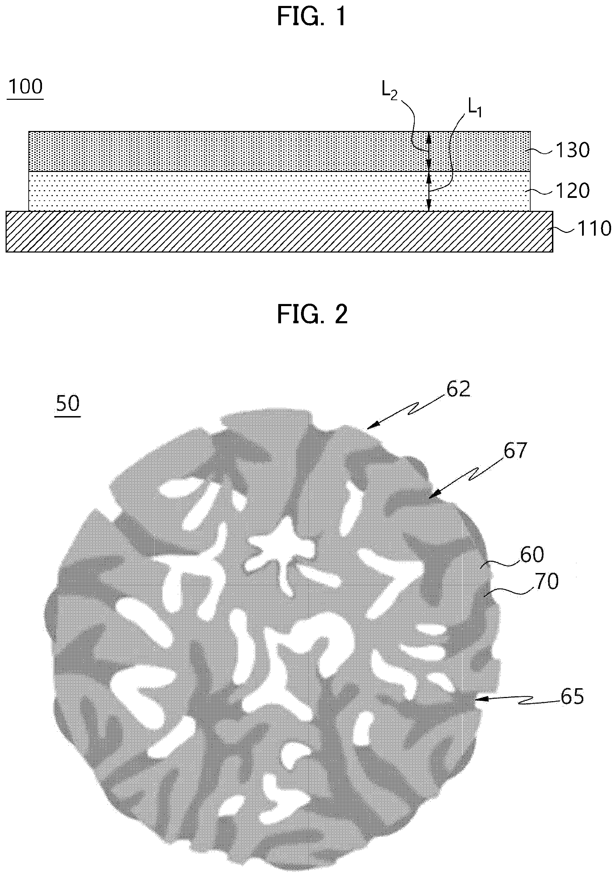

FIG. 1 is a schematic cross-sectional view illustrating an anode for a lithium secondary battery in accordance with example embodiments.

Referring to FIG. 1, an anode 100 includes an anode current collector 110, a first anode active material layer 120 and a second anode active material layer 130.

For example, the anode current collector 110 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 110 may be in a range from 5 μm to 50 μm.

The first cathode active material layer 120 including a first cathode active material including a graphite-based active material is disposed on at least one surface of the cathode current collector 110. In an embodiment, the first cathode active material layer 120 may directly contact the cathode current collector 110.

In some embodiments, the graphite-based active material may include artificial graphite and/or natural graphite.

Accordingly, adhesion between the anode current collector 110 and the first anode active material layer 120 may be enhanced, and electron mobility may be improved.

A content of the graphite-based active material based on a total weight of the first anode active material may be 40 wt% or more, 50 wt% or more, 60 wt% or more, 70 wt% or more, 80 wt% or more, or 90 wt% or more.

The content of the graphite-based active material based on the total weight of the first cathode active material may be 99 wt% or less, 95 wt% or less, 90 wt% or less, or 85 wt% or less. In this case, the first cathode active material may further include a silicon-containing active material, etc.

In an embodiment, the first anode active material may substantially consist of the graphite-based active material.

In example embodiments, the second cathode active material layer 130 including a second cathode active material including composite particles is disposed on the first cathode active material layer 120. In an embodiment, the second cathode active material layer 130 may directly contact the first cathode active material layer 120.

For example, the composite particles may include silicon (Si).

FIG. 2 is a schematic cross-sectional view illustrating a composite particle in accordance with example embodiments.

FIG. 2 illustrates a schematic shape of the composite particle for convenience of descriptions, but the structure/shape of the composite particle of the present disclosure is not limited to that illustrated in FIG. 2. For example, a cross-section of the carbon-based particle may be randomly changed from a circular shape. Additionally, the silicon-containing coating may be partially formed on pores and a surface of the carbon-based particle, or may be formed as a plurality of discontinuous islands or patterns.

Referring to FIG. 2, a composite particles 50 may include a carbon-based particle 60 including a plurality of pores 65 and a silicon-containing coating 70.

In some embodiments, volume expansion of silicon contained in the silicon-containing coating 70 may be alleviated by the pores 65 of the carbon-based particle. Accordingly, cracks due to a difference between volume expansion ratios of carbon (e.g., about 150 volume% or less) and silicon (e.g., about 400 volume% or more) during charging and discharging of the battery may be prevented while employing the relatively high capacity properties of silicon. Thus, gas generation due to a side reaction between the anode active material and an electrolyte solution may be prevented, and the life-span properties of the secondary battery may be improved.

The pores 65 of the carbon-based particle 60 may have a shape indented into the carbon-based particle 60 from an outermost portion of the carbon-based particle 60. For example, the pores 65 may include open pores to an outside of the carbon-based particles 60.

As used herein, the term "a surface of the carbon-based particles" and/or "a surface of the carbon-based particle 60" may refer to an outer surface 62 of the carbon-based particle 60, an inner surface 67 of the pore 65, or the outer surface 62 of the carbon-based particle 60 and the inner surface 67 of the pore 65. The inner surface 67 of the pore 65 may represent a surface of the pore 65 indented into the carbon-based particle 60.

The silicon-containing coating 70 may be formed on at least a portion of the outer surface 62 of the carbon-based particle 60. The silicon-containing coating 70 may be formed on at least a portion of the inner surface 67 of the pore 65 of the carbon-based particles 60. The silicon-containing coating 70 may be formed on at least a portion of the outer surface 62 of carbon-based particle 60 and at least a portion of the inner surface 67 of pore 65.

In some embodiments, the carbon-based particle 60 may include an activated carbon, a carbon nanotube, a carbon nanowires, graphene, a carbon fiber, carbon black, graphite, a porous carbon, a pyrolyzed cryogel, a pyrolyzed xerogel, a pyrolyzed aerogel, etc. These may be used alone or in a combination of two or more therefrom.

In some embodiments, the carbon-based particle 60 may have an amorphous structure or a crystalline structure.

In some embodiments, a size of the pore 65 of the carbon-based particle 60 may be in a range from 0.1 nm to 20 nm, from 0.5 nm to 15 nm, or from 1 nm to 10 nm. In the above range, excessive deposition of silicon may be prevented, and cracks of the anode active material during charging and discharging of the secondary battery may be further suppressed.

The size of the pore 65 may refer to a diameter of an entrance of the pore 65 formed at the surface of the carbon-based particle 65.

In some embodiments, the silicon-containing coating 70 may include silicon, and optionally may further include $SiO_x$ ($0<x<2$).

In an embodiment, the composite particle 50 may not include silicon carbide (SiC). In this case, the capacity of the anode active material may be enhanced. In example embodiments, formation of silicon carbide may be suppressed by controlling a temperature and a time of the silicon deposition.

In some embodiments, the second cathode active material may further include a graphite-based active material. The graphite-based active material may include artificial graphite and/or natural graphite. The life-span properties and structural stability of the anode may be improved by the graphite-based active material.

A content of the composite particles based on a total weight of the second anode active material (e.g., a total weight of the plurality of the composite particles and the graphite-based active material) may be 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more.

The content of the composite particles based on the total weight of the second anode active material may be 90 wt% or less, 85 wt% or less, 80 wt% or less, 75 wt% or less, 70 wt% or less, 65 wt% or less, 60 wt% or less, 55 wt% or less, or 50 wt% or less.

In an embodiment, the second anode active material may substantially consist of the composite particles and the graphite-based active material.

A tortuosity T2 of the second anode active material layer 130 obtained by an X-ray microscope (XRM) analysis is 2.32 or less. In some embodiments, the tortuosity T2 of the second anode active material layer 130 may be 2.29 or less, or 2.09 or less. In some embodiments, the tortuosity T2 may be in a range from 1 to 2.32, from 1 to 2.29, or from 1 to 2.09.

In some embodiments, the tortuosity T2 may be defined by Equation 1 below.

$$[\text{Equation 1}]$$

$$T2 = L_{P2}/L_2$$

In Equation 1, $L_{P2}$ is an average flow path length of a lithium ion when the lithium ion penetrates through the second anode active material layer 130 in a thickness direction, and $L_2$ is a thickness of the second anode active material layer 130. Units of $L_{P2}$ and $L_2$ may be the same.

In an embodiment, $L_{P2}$ may represent an average distance of a path formed by connecting pores included in the second anode active material layer 130.

The term "thickness direction" used herein may refer to a thickness direction of each of the anode current collector 110, the first anode active material layer 120 and the second anode active material layer 130, or a direction in which the anode current collector 110, the first anode active material layer 120 and the second anode active material layer 130 are stacked.

A 3D image may be obtained through the X-ray microscope analysis, and a 3D modeling image may be obtained using an analysis software (e.g., Matdict Material Characterization, GeoDict Software). Further, tortuosity T2 may be measured from the analysis software.

For example, as the tortuosity increases, a path formed by a pore structure at an inside of the anode active material layer may become more complex, or the number of tortuosities may be increased. Accordingly, a transfer path of a liquid (e.g., an electrolyte solution of the lithium secondary battery) in the anode active material layer and a degree of diffusion of the lithium ions can be estimated using the tortuosity.

For example, as the tortuosity increases, the lithium ion transfer path at an inside of the anode active material layer may become longer. For example, as the tortuosity becomes small, the lithium transfer may be facilitated to improve power and life-span properties.

For example, the tortuosity may represent a ratio of an actual movement distance of a substance penetrating the inside of the anode active material layer relative to a thickness of the anode active material layer. For example, when the thickness of the electrode layer is the same, if the distance of the lithium ion movement is relatively small, the tortuosity may be relatively small. In this case, a lithium ion mobility of the anode active material layer may be increased, and a rapid charging performance may be improved.

In the above-mentioned range of the tortuosity T2, the lithium ion mobility of the second anode active material layer 130 serving as an outermost layer of the anode 100 may be improved. Accordingly, the lithium ions may be easily transferred to the anode current collector 110, and the life-span properties during the rapid charging may be improved.

Theoretically, the distance of the lithium ion movement is greater than the thickness of the anode active material layer, and thus the tortuosity T2 is 1 or more.

In some embodiments, a tortuosity T1 of the first anode active material layer 120 obtained by the X-ray microscopy analysis may be greater than the tortuosity T2 of the second anode active material layer 130.

In some embodiments, the tortuosity T1 may be defined by Equation 2 below.

$$[\text{Equation 2}]$$

$$T_1 = L_{P1}/L_1$$

In Equation 2, $L_{P1}$ is an average flow path length of a lithium ion when the lithium ion penetrate through the first anode active material layer 120 in the thickness direction, and $L_1$ is a thickness of the first anode active material layer 120. Units of $L_{P1}$ and $L_1$ may be the same.

In an embodiment, $L_{P1}$ may represent an average distance of a path formed by connecting pores included in the first anode active material layer 120.

A 3D image may be obtained through the X-ray microscope analysis, and a 3D modeling image may be obtained using an analysis software (e.g., Matdict Material Characterization, GeoDict Software). Further, tortuosity T1 may be measured from the analysis software.

For example, a 3D image of a sample of the anode active material layer 120 and 130 may be obtained using an X-ray microscope (e.g., Zeiss Xradia 620 versa, Zeiss). The 3D image may be analyzed using a analysis software (e.g., Matdict Material Characterization, GeoDict Software) to obtain a 3D modeling image including the anode active material and the pore structure, and then the tortuosities T1 and T2 of the anode active material layer 120 and 130 may be measured.

The tortuosity T1 of the first anode active material layer 120 adjacent to the anode current collector 110 may be adjusted to be relatively greater, a contact between the first anode active material and a conductive material around the anode current collector 110 may be increased, and a transfer path of electrons may be increased. Accordingly, an electron mobility through the anode active material may be enhanced.

The tortuosity T2 of the second anode active material layer 130 may be adjusted to be relatively small so that the mobility of the lithium ions toward the anode current collector 110 may be improved. Accordingly, both the electron mobility and the lithium ion mobility in the anode 100 may be enhanced.

In some embodiments, the tortuosity T1 of the first anode active material layer 120 may be in a range from 2.34 to 3.0. In the above range, the electron mobility around the anode current collector 110 may be improved while maintaining the appropriate lithium ion mobility.

In some embodiments, a ratio of the tortuosity T1 of the first anode active material layer 120 to the tortuosity T2 of the second anode active material layer 130 may be in a range from 1.0 to 1.45, from 1.01 to 1.44, from 1.03 to 1.44, from 1.2 to 1.44, or from 1.24 to 1.44. In the above range, the electron mobility and the ion mobility of the anode having the multi-layered structure may both be enhanced, and a capacity retention may be improved.

For example, the tortuosity T1 of the first anode active material layer 120 and the tortuosity T2 of the second anode active material layer may each be measured by the above-described analysis method.

In some embodiments, the tortuosity T1 and/or the tortuosity T2 may be controlled by the content of the composite particles 50 based on the total weight of the first anode active material and the second anode active material, the content of the composite particles 50 based on the total weight of the second anode active material, types of the first anode active material and the second anode active material, etc.

The tortuosity T1 and/or the tortuosity T2 may also be controlled by formation conditions of the composite particles 50. For example, the tortuosity T1 and/or the tortuosity T2 may be controlled by a porosity, a pore size, a density, firing conditions, etc., of the carbon-based particle included in the composite particle 50; a thickness, a density, heat treatment conditions, etc., of the silicon-containing coating.

In an embodiment, the tortuosity T1 and/or the tortuosity T2 may be adjusted using a magnetic orientation performed by applying a magnetic field when fabricating the anode 100, conditions of the magnetic orientation conditions.

For example, the capacity properties may be improved while reducing the tortuosity T2 using the composite particles 50, thereby improving the rapid charging performance.

In some embodiments, the content of the composite particles 50 based on the total weight of the first anode active material and the second anode active material may be in a range from 2 wt% to 30 wt%. In an embodiment, the content of the composite particles 50 based on the total weight of the first anode active material and the second anode active material may be in a range from 4.5 wt% to 24 wt%. In this range, the life-span, power and life-span during the rapid charging properties may be improved.

In some embodiments, the content of the composite particles 50 based on the total weight of the second anode active material may be in a range from 4 wt% to 40 wt%. In an embodiment, the content of the composite particles 50 based on the total weight of the second anode active material may be in a range from 9 wt% to 40 wt%. In this range, the tortuosity T2 of the second anode active material layer 130 may be reduced. Accordingly, the lithium ion mobility of the anode 100 may be enhanced, and the life-span properties during the rapid charging may be improved.

In some embodiments, the first anode active material may not include the composite particles 50. Accordingly, a ratio of the graphite-based active material in the first anode active material layer 120 may be increased, and electronic conductivity and structural stability of the anode 100 may be improved.

In some embodiments, the first anode active material layer 120 may be directly disposed on the anode current collector 110, and the second anode active material layer 130 may be directly disposed on the first anode active material layer 120.

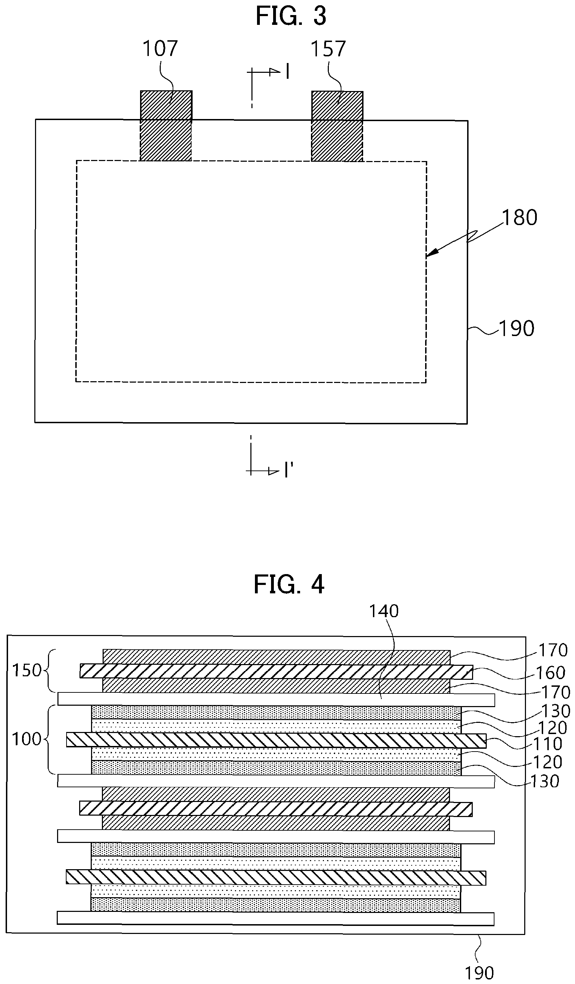

FIG. 3 and FIG. 4 are a schematic plan view and a schematic cross-sectional view, respectively, illustrating a lithium secondary battery in accordance with example embodiments. For example, FIG. 4 is a cross-sectional view taken along a line I-I' of FIG. 3 in a thickness direction.

Referring to FIGS. 3 and 4, the lithium secondary battery may include the above-described anode 100 and the cathode 150 facing the anode 100.

The cathode 150 may include a cathode current collector 160 and a cathode active material layer 170 formed on at least one surface of the cathode current collector 160.

The cathode current collector 160 may include stainless steel, nickel, aluminum, titanium, or an alloy thereof. The cathode current collector 160 may include aluminum or stainless steel surface-treated with carbon, nickel, titanium, silver, etc. For example, a thickness of the cathode current collector 160 may be 5 $\mu$m to 50 $\mu$m.

The cathode active material layer 170 may include a cathode active material. The cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1.

[Chemical Formula 1] $\quad\quad Li_xNi_aM_bO_{2+z}$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

[Chemical Formula 1-1] $\quad\quad Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., , a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include a Li-rich layered oxide (LLO)/OLO (Over-Lithiated Oxide)-based active material, a Mn-rich active material, a Co-less-based active material, etc., which may have a chemical structure or a crystal structure represented by Chemical Formula 2 below. These may be used alone or in a combination of two or more therefrom.

[Chemical Formula 2]     $p[Li_2MnO_3]\cdot(1-p)[Li_qJO_2]$

In Chemical Formula 2, $0<p<1$, $0.9\leq q\leq1.2$, and J may include at least one element from Mn, Ni, Co, Fe, Cr, V, Cu, Zn, Ti, Al, Mg and B.

For example, the cathode slurry may be prepared by mixing the cathode active material in a solvent. The cathode slurry may be coated on the cathode current collector 160, and then dried and pressed to prepare the cathode active material layer 170. The coating may include, e.g., a gravure coating, a slot die coating, a multi-layered simultaneous die coating, an imprinting, a doctor blade coating, a dip coating, a bar coating, a casting, etc. The cathode active material layer 170 may further include a binder, may optionally further include a conductive material, a thickener, etc.

The solvent may include N-methyl-2-pyrrolidone (NMP), dimethylformamide, dimethylacetamide, N,N-dimethylaminopropylamine, ethylene oxide, tetrahydrofuran, etc.

The binder may include polyvinylidene fluoride (PVDF), vinylidene fluoride-co-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 170 may be reduced and an amount of the cathode active material may be relatively increased. Accordingly, the power and capacity properties of the secondary battery may be improved.

The conductive material may be used to improve conductivity of the cathode active material layer 170 and/or mobility of lithium ions or electrons. For example, the conductive material may include a carbon-based conductive material such as graphite, carbon black, acetylene black, Ketjen black, graphene, a carbon nanotube, a vapor-grown carbon fiber (VGCF), a carbon fiber and/or a metal-based conductive material such as tin, tin oxide, titanium oxide, a perovskite material including $LaSrCoO_3$ and $LaSrMnO_3$, etc. These may be used alone or in a combination of two or more therefrom.

The cathode slurry may further include a thickener and/or a dispersive agent. In an embodiment, the cathode slurry may include the thickener such as carboxymethyl cellulose (CMC).

The first anode active material layer 120 may be formed on at least one surface of the anode current collector 110, and the second anode active material layer 130 may be formed on the first anode active material layer 120.

A first anode slurry may be prepared by mixing the above-described first anode active material in a solvent. The first anode slurry may be coated/deposited on at least one surface of the anode current collector 110, and then dried and pressed to prepare the first anode active material layer 120. The coating may include a method such as a gravure coating, a slot die coating, a multi-layer simultaneous die coating, an imprinting, a doctor blade coating, a dip coating, a bar coating, a casting, and the like.

A second anode slurry may be prepared by mixing the above-described second anode active material in a solvent. The second anode slurry may be coated/deposited on the first anode active material layer 120, and then dried and pressed to prepare the second anode active material layer 130. The coating method substantially the same as that for the formation of the first anode active material layer 120 may also be used.

In an embodiment, the above-described first anode slurry may be coated on at least one surface of the anode current collector 110, the second anode slurry may be coated on the first anode slurry, and then dried and pressed simultaneously.

The first and second anode active material layers 120 and 130 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in combination of two or more therefrom.

The above-described materials used in the fabrication of the cathode 150 may also be used as the binder, the conductive material and thickener.

In some embodiments, a styrene-butadiene rubber (SBR)-based binder, carboxymethyl cellulose (CMC), a polyacrylic acid-based binder, a poly(3,4-ethylenedioxythiophene (PEDOT)-based binder, etc., may be used as the anode binder. These may be used alone or in a combination of two or more therefrom.

In example embodiments, a separator 140 may be interposed between the cathode 150 and the anode 100. The separator 140 may be included to prevent an electrical shortcircuiting between the cathode 150 and the anode 100 while allowing an ion flow. For example, a thickness of the separator may be in a range from 10 μm to 20 μm.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or a multi-layered structure including the polymer film and/or the non-woven fabric as described above.

In example embodiments, an electrode cell may be defined by the cathode 150, the anode 100 and the separator 140, and a plurality of the electrode cells may be stacked to form an electrode assembly 180 having, e.g., a jelly roll shape. For example, the electrode assembly 180 may be formed by winding, stacking, z-folding, stack-folding, etc., of the separator 140.

The electrode assembly 180 may be accommodated together with an electrolyte solution in a case 190 to define the lithium secondary battery. In example embodiments, a non-aqueous electrolyte solution may be used as the electrolyte solution.

The non-aqueous electrolyte solution may include a lithium salt serving as an electrolyte and an organic solvent. The lithium salt may be represented by, e.g., $Li^+X^-$, and examples of an anion $X^-$ may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gammabutyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution. In this case, the lithium secondary battery may be manufactured in the form of an all-solid-state battery. Additionally, a solid electrolyte layer may be disposed between the cathode 150 and the anode 100 instead of the separator 140.

The solid electrolyte may include a sulfide-based electrolyte. Non-limiting examples of the sulfide-based electrolyte include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z represents Ge, Zn or Ga), $Li_2S$-$GeS_2$, $Li_2S$-$SiS_2$-$Li_3PO_4$, $Li_2S$-$SiS_2$-$Li_pMO_q$, (p and q positive numbers, and M represents P, Si, Ge, B, Al, Ga or In), $Li_{7-x}PS_6$-$xCl_x$ (0≤x≤2), $Li_{7-x}PS_6$-$xBr_x$ (0≤x≤2), $Li_{7-x}PS_6$-$xI_x$ (0≤x≤2), etc. These may be used alone or in a combination of two or more therefrom.

In an embodiment, the solid electrolyte may include an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-ZnO, etc.

As illustrated in FIG. 3, electrode tabs (a cathode tab and an anode tab) may protrude from the cathode current collector 160 and the anode electrode current collector 110 included in each electrode cell to one side of a case 190. The electrode tabs may be welded together with the one side of the case 190 to form an electrode lead (a cathode lead 157 and an anode lead 107) extending or exposed to an outside of the case 190.

The lithium secondary battery may be manufactured in, e.g., a cylindrical shape using a can, a prismatic shape, a pouch shape or a coin shape.

Example 1

### (1) Formation of first anode active material layer

A first anode slurry was obtained by mixing 95.5 wt% of artificial graphite as a first anode active material, 1 wt% of carbon nanotube (CNT) as a conductive material, 2 wt% of styrene-butadiene rubber (SBR) as a binder, and 1.5 wt% of carboxymethyl cellulose (CMC) as a thickener.

### (2) Formation of second anode active material layer

### 1) Preparation of composite particle

### Preparation of carbon-based particle

i) Synthesis of resol oligomer: phenol and formaldehyde were mixed in a molar ratio of 1:2, and 1.5 wt% of triethylamine was added to react under conditions of 85°C, 4 h and 160 rpm (stirring).
ii) Suspension stabilization of resol oligomer: 1 g of polyvinyl alcohol (PVA) was dispersed in a water-dispersible medium, and then added to the resol oligomer.
iii) Curing of resol oligomer: 3 g of hexamethylene tetramine (HMTA) as a curing agent was added and reacted at 98°C, 12 h and 400 rpm (stirring).
iv) Acquisition of carbon material: The cured resol oligomer was classified using a sieve, and then washed with water using $H_2O$.
v) Unreacted monomer and oligomer were removed from the washed resol oligomer using ethanol, and then dried.
vi) Carbonization and activation: The dried resol oligomer was fired at 900 °C for 1 hour under a nitrogen atmosphere. During the firing, $CO_2$ gas was introduced at 1 L/min and carbonized at 900 °C to prepare a porous carbon-based particle.

### Formation of silicon-containing coating

A silane gas was injected to the porous carbon-based particle into a CVD coater at a flow rate of 50 mL/min to 100 mL/min, a temperature was raised to 550°C at a rate of 5°C/min to 20°C/min, and then maintained for about 120 minutes to prepare composite particles including a silicon-containing coating.

### 2) Formation of second anode active material layer

The prepared composite particles and artificial graphite were mixed in a weight ratio of 4:6 and used as a second anode active material.

A second anode slurry was obtained by mixing 95.5 wt% of the second anode active material, 1 wt% of CNT as a conductive material, 2 wt% of SBR as a binder, and 1.5 wt% of CMC as a thickener.

The first anode slurry and the second anode slurry were sequentially coated on a copper current collector, dried and pressed to form an anode including the first anode active material layer and the second anode active material layer. A loading amount ratio (volume ratio) of the first anode slurry and the second anode slurry above was adjusted to 5:5.

### (3) Fabrication of a lithium half-cell

A lithium half-cell including the anode and using a lithium metal as a counter electrode (cathode) was manufactured.

Specifically, a lithium coin half-cell of a CR2016 (diameter: 20 mm, thickness: 1.6 mm) standard was formed by interposing a separator (polyethylene, thickness: 20 μm) between the anode and the lithium metal (thickness: 1 mm).

The assembly of the lithium metal/separator/anode was placed in a coin cell plate, and a cap was covered and clamped after injecting an electrolyte solution.

In the preparation of the electrolyte solution, a 1 M $LiPF_6$ solution was formed using a mixed solvent of EC/EMC (3:7; volume ratio), and 2.0 vol% of fluoroethylene carbonate (FEC) was added based on a total volume of the electrolyte solution. After the clamping, impregnation was performed for 3 to 24 hours, and then 3 cycles of charge and discharge were performed at 0.1C (charge conditions: CC-CV 0.1C 0.01V 0.01C CUT-OFF, discharge conditions: CC 0.1C 1.5V CUT-OFF).

Examples 2 to 13 and 17, and Comparative Example 3

An anode and a lithium half-cell were manufactured by the same method as that in Example 1, except that a content of the composite particles based on a total weight of the first anode active material and the second anode active material, a content of the composite particles based on a total weight of the second anode active material, and a loading amount ratio of the first and second anode active materials was adjusted as shown in Table 1 below.

Example 14

An anode and a lithium half-cell were manufactured by the same method as that in Example 1, except that a stack structure in which the first anode slurry and the second anode slurry were sequentially coated on a current collector was passed through a pair of neodymium magnets spaced apart from each other by 3 cm for 30 seconds to apply a magnetic field of 3,000 Gauss (a magnetic orientation), and then dried and pressed.

Example 15

An anode and a lithium half-cell were manufactured by the same method as that in Example 1, except that a stack structure in which the first anode slurry and the second anode slurry were sequentially coated on a current collector was passed through a pair of neodymium magnets spaced apart from each other by 10 cm for 30 seconds to apply a magnetic field of 3,000 Gauss (a magnetic orientation), and then dried and pressed.

Example 16

An anode and a lithium half-cell were manufactured by the same method as that in Example 1, except that a stack structure in which the first anode slurry and the second anode slurry were sequentially coated on a current collector was passed through a pair of neodymium magnets spaced apart from each other by 10 cm for 60 seconds to apply a magnetic field of 3,000 Gauss (a magnetic orientation), and then dried and pressed.

Comparative Example 1

An anode and a lithium half-cell were manufactured by the same method as that in Example 1, except that a mixture of the composite particle and artificial graphite (weight ratio of 2:8) was used as the first anode active material and the second anode active material.

Comparative Example 2

An anode and a lithium half-cell were manufactured by the same method as that in Example 1, except that artificial graphite was only used as the second anode active material.

Comparative Examples 4 and 5

An anode and a lithium half-cell were manufactured by the same method as that in Example 1, except that SiOx(0<x<2) was used as the silicon-based active material instead of the above-prepared composite particles.
The content of the composite particles based on the total weight of the first anode active material and the second anode active material, the content of the composite particles based on the total weight of the second anode active material, and the loading ratio (volume ratio) of the first anode active material layer and the second anode active material layer, and appliance of the magnetic field are shown in Table 1 below. In the magnetic field appliance in Table 1, O refers that the magnetic field was applied, and X refers that the magnetic field was not applied.
The contents in Comparative Examples 4 and 5 in Table 1 represent the content of SiOx (0<x<2).

[Table 1]

| | content of composite particle (wt%) | | loading ratio (volume ratio) | magnetic field appliance |
| --- | --- | --- | --- | --- |
| | based on the total weight of the first and second anode active materials | based on the total weight of the second anode active material | | |
| Example 1 | 20 | 40 | 5:5 | X |

(continued)

| | content of composite particle (wt%) | | loading ratio (volume ratio) | magnetic field appliance |
|---|---|---|---|---|
| | based on the total weight of the first and second anode active materials | based on the total weight of the second anode active material | | |
| Example 2 | 24 | 40 | 4:6 | X |
| Example 3 | 16 | 40 | 6:4 | X |
| Example 4 | 20 | 32 | 3.75:6.25 | X |
| Example 5 | 4.5 | 9 | 5:5 | X |
| Example 6 | 2 | 4 | 5:5 | X |
| Example 7 | 30 | 40 | 2.5:7:5 | X |
| Example 8 | 1.5 | 6 | 7.5:2.5 | X |
| Example 9 | 32 | 40 | 2:8 | X |
| Example 10 | 2 | 3 | 1/3:2/3 | X |
| Example 11 | 21 | 42 | 5:5 | X |
| Example 12 | 18 | 20 | 1:9 | X |
| Example 13 | 8 | 40 | 8:2 | X |
| Example 14 | 20 | 40 | 5:5 | O |
| Example 15 | 20 | 40 | 5:5 | O |
| Example 16 | 20 | 40 | 5:5 | O |
| Example 17 | 22 | 40 | 4.5:5.5 | X |
| Comparative Example 1 | 20 | 20 | 5:5 | X |
| Comparative Example 2 | 0 | 0 | 5:5 | X |
| Comparative Example 3 | 3 | 30 | 9:1 | X |
| Comparative Example 4 | 0 | 15 | 5:5 | X |
| Comparative Example 5 | 9 | 9 | 5:5 | X |

Experimental Example

(1) Measurement of tortuosity

The anodes manufactured according to Examples and Comparative Examples were cut into 3 mm x 10 mm sizes to prepare samples.

The sample was placed into an X-ray microscope (Zeiss Xradia 620 versa, Zeiss) to obtain a 3D image of the anode.

The measurement conditions of the X-ray microscope were as follows.

    i) Source condition: 60 kV, 4.5 W
    ii) Voxel size: 350 nm

The measured 3D image was used to obtain a 3D modeling image including the anode active material and a pore structure using an analysis software (GeoDict Software, Math 2 Market).

For the 3D modeling image, the tortuosity T1 of the first anode active material layer and the tortuosity T2 of the second anode active material layer were measured using a Diffudict Module (GeoDict Software, Math 2 Market) function in the analysis software.

Specifically, in the setting of the analysis software, Computation Direction of the Percolation path was set to a Z-direction (a thickness direction). Thereafter, the tortuosity of each of the first and second anode active material layers was measured in the 3D modeling image.

## (2) Evaluation on capacity retention (life-span properties) during rapid charging

The lithium half-cells according to Examples and Comparative Examples were charged at a C-rate of 3.25C / 3.0C / 2.75C / 2.5C / 2.25C / 2.0C / 1.75C / 1.5C / 1.25C / 1.0C / 0.75C / 0.5C by a step charging method to reach a depth of discharge (DOD) of 72% within 35 minutes, and then discharged at 1/3C. The above charging and discharging were set as one cycle, and a rapid charging evaluation was performed by repeating the cycle.

After repeating 200 cycles with an interphase of 10 minutes between the charge and discharge cycles, a discharge capacity after the 200th cycle was divided by a discharge capacity after the 1st cycle to be calculated as a percentage.

The measurement and evaluation results are shown in Table 2 below. In the capacity retention during the rapid charging, N/A refers that that the capacity retention suddenly dropped before the 200th cycle and the battery became impracticable.

Ratios (T1/T2) of the tortuosity D1 of the first anode active material layer to the tortuosity D2 of the second anode active material layer are also shown in Table 2.

[Table 2]

| | tortuosity of the first anode active material (T1) | tortuosity of the second anode active material (T2) | T1/T2 | capacity retention during rapid charging (%, 200 cycles) |
|---|---|---|---|---|
| Example 1 | 2.34 | 2.26 | 1.04 | 96.7 |
| Example 2 | 2.34 | 2.25 | 1.04 | 96.9 |
| Example 3 | 2.6 | 2.09 | 1.24 | 98.0 |
| Example 4 | 2.35 | 2.28 | 1.03 | 96.9 |
| Example 5 | 2.40 | 2.27 | 1.06 | 96.3 |
| Example 6 | 2.5 | 2.31 | 1.08 | 95.8 |
| Example 7 | 2.38 | 2.15 | 1.11 | 96.1 |
| Example 8 | 2.71 | 2.32 | 1.17 | 93.5 |
| Example 9 | 2.33 | 2.32 | 1.00 | 95.1 |
| Example 10 | 2.34 | 2.31 | 1.01 | 95.5 |
| Example 11 | 2.35 | 2.32 | 1.01 | 95.3 |
| Example 12 | 2.32 | 2.32 | 1.00 | 93.3 |
| Example 13 | 3.02 | 2.08 | 1.45 | 93.6 |
| Example 14 | 2.8 | 1.94 | 1.44 | 99.0 |
| Example 15 | 2.73 | 2.05 | 1.33 | 98.8 |
| Example 16 | 2.65 | 2.11 | 1.26 | 98.3 |
| Example 17 | 2.31 | 2.32 | 1.00 | 95.2 |
| Comparative Example 1 | 2.27 | 2.39 | 0.95 | N/A |
| Comparative Example 2 | 2.40 | 2.37 | 1.01 | 66.1 |
| Comparative Example 3 | 2.30 | 2.34 | 0.98 | 74.2 |
| Comparative Example 4 | 2.31 | 2.33 | 0.99 | 85.8 |
| Comparative Example 5 | 2.34 | 2.35 | 1.00 | 82.1 |

Referring to Table 1 and Table 2, in Examples where the tortuosity T2 of the second anode active material layer was 2.32 or less, the capacity retentions during the rapid charging were generally enhanced compared to those from Comparative Examples.

In Examples 8 and 9 where the contents of the composite particles were not within a range from 2 wt% to 30 wt% based on the total weight of the first anode active material and the second anode active material, the tortuosity T2 was relatively increased and the capacity retention during the rapid charging was lowered compared to those from other Examples.

In examples 10 and 11 where the contents of the composite particles were not within a range of 4 wt% to 40 wt% based on the total weight of the second anode active material, the tortuosity T2 was relatively increased, and the capacity retention during the rapid charging was lowered compared to those from other Examples.

In example 12 where the tortuosity T1 was less than 2.34, the capacity retention during the rapid charging was lowered compared to those from other Examples.

In Example 13 where the tortuosity T1 exceeded 3.0, the capacity retention during the rapid charging was lowered compared to those from Examples.

In Examples 14 to 16 where the magnetic field was applied, the tortuosity T2 was decreased and the capacity retention was improved.

In Example 17 where the tortuosity T1 of the first anode active material layer was less than the tortuosity T2 of the second anode active material layer, the capacity retention during the rapid charging was lowered compared to those from other Examples.

**Claims**

1. An anode for a lithium secondary battery, comprising:

   an anode current collector;
   a first anode active material layer disposed on at least one surface of the anode current collector, the first anode active material layer comprising a first anode active material; and
   a second anode active material layer disposed on the first anode active material layer, the second anode active material layer comprising a second anode active material,
   wherein the first anode active material comprises a graphite-based active material, and the second anode active material comprises a composite particle including silicon, and
   a tortuosity of the second anode active material layer obtained by an X-ray microscope (XRM) analysis is 2.32 or less.

2. The anode for a lithium secondary battery of claim 1, wherein the tortuosity of the second anode active material layer is defined by Equation 1:

$$[\text{Equation 1}]$$

$$T2 = L_{P2}/L_2$$

   wherein, in Equation 1, T2 is the tortuosity of the second anode active material layer, $L_{P2}$ is an average flow path length of a lithium ion when the lithium ion penetrates the second anode active material layer in a thickness direction, and $L_2$ is a thickness of the second anode active material layer.

3. The anode for a lithium secondary battery of any one of claims 1 and 2, wherein the composite particle comprises a carbon-based particle and a silicon-containing coating formed on a surface of the carbon-based particle.

4. The anode for a lithium secondary battery of claim 3, wherein the carbon-based particle comprises at least one selected from the group consisting of an activated carbon, a carbon nanotube, a carbon nanowires, graphene, a carbon fiber, carbon black, graphite, a porous carbon, a pyrolyzed cryogel, a pyrolyzed xerogel and a pyrolyzed aerogel.

5. The anode for a lithium secondary battery of any one of claims 1 to 4, wherein a content of the composite particle based on a total weight of the first anode active material and the second anode active material is in a range from 2 wt% to 30 wt%, preferably from 4.5 wt%

6. The anode for a lithium secondary battery of claim 1, wherein the second anode active material further comprises a graphite-based active material.

7. The anode for a lithium secondary battery of any one of claims 1 to 6, wherein a content of the composite particle based on a total weight of the second anode active material is in a range from 4 wt% to 40 wt%, preferably from 9 wt% to 40 wt%.

8. The anode for a lithium secondary battery of any one of claims 1 to 7, wherein the graphite-based active material comprises at least one of artificial graphite and natural graphite.

9. The anode for a lithium secondary battery of claim 1, wherein a tortuosity of the first anode active material layer obtained through X-ray microscope (XRM) analysis is greater than the tortuosity of the second anode active material layer.

10. The anode for a lithium secondary battery of claim 9, wherein the tortuosity of the first anode active material layer is defined by Equation 2:

$$[Equation\ 2]$$

$$T1 = L_{P1}/L_1$$

wherein, in Equation 2, T1 is the tortuosity of the first anode active material layer, $L_{P1}$ is an average flow path length of a lithium ion when the lithium ion penetrates the first anode active material layer in a thickness direction, and $L_1$ is a thickness of the first anode active material layer.

11. The anode for a lithium secondary battery of claim 10, wherein the tortuosity of the first anode active material layer is in a range from 2.34 to 3.0.

12. The anode for a lithium secondary battery of any one of claims 9 to 11, wherein a ratio of the tortuosity of the first anode active material layer relative to the tortuosity of the second anode active material layer is in a range from 1.03 to 1.44.

13. The anode for a lithium secondary battery of any one of claims 1 to 12, wherein the first anode active material does not include the composite particle.

14. The anode for a lithium secondary battery of any one of claims 1 to 13, wherein the first anode active material layer is directly disposed on the anode current collector, and the second anode active material layer is directly disposed on the first anode active material layer.

15. A lithium secondary battery, comprising:

an anode for a lithium secondary battery according to any one of claims 1 to 14; and
a cathode facing the anode.

# FIG. 1

<u>100</u>

L$_2$  L$_1$

130
120
110

# FIG. 2

<u>50</u>

62
67
60
70
65

# FIG. 3

# FIG. 4